# EUROPEAN PATENT SPECIFICATION

(11) **EP 4 538 315 B1**
(45) Date of publication and mention of the grant of the patent: **06.08.2025**
(21) Application number: 23203615.2
(22) Date of filing: 13.10.2023
(51) Int. Cl.: F16L 9/12, C08J 5/04, B29B 15/12, B32B 1/08, B32B 27/28, C08J 5/24

(54) **A FIBRE-REINFORCED THERMOPLASTIC UNIDIRECTIONAL TAPE, A METHOD OF PREPARING AND A USE THEREOF AND A REINFORCED THERMOPLASTIC PIPE**
FASERVERSTÄRKTES THERMOPLASTISCHES UNIDIREKTIONALES BAND, VERFAHREN ZUR HERSTELLUNG UND VERWENDUNG DAVON UND VERSTÄRKTES THERMOPLASTISCHES ROHR
BANDE UNIDIRECTIONNELLE THERMOPLASTIQUE RENFORCÉE PAR DES FIBRES, PROCÉDÉ DE PRÉPARATION ET UTILISATION DE CELLE-CI ET TUYAU THERMOPLASTIQUE RENFORCÉ

(43) Date of publication of application: 16.04.2025
(73) Proprietor: SABIC Global Technologies B.V., 4612 PX Bergen op Zoom (NL)
(72) Inventor: YALDIZ, Recep, 6160 GA Geleen (NL); SHI, Huajie, 6160 GA Geleen (NL); ANBUCHEZHIAN, Nithish, 6160 GA Geleen (NL); BASHIR, Zahir, 6160 GA Geleen (NL); GHAZZAWI, Yousof Mustafa, 6160 GA Geleen (NL); AL-MANA, Faisal Abdulaziz, 6160 GA Geleen (NL); AL GHAMDI, Ali Mohammed, 6160 GA Geleen (NL)
(74) Representative: Sabic Intellectual Property Group

(56) References cited:
- RU-U1- 203 164
- US-A1- 2023 016 920
- YAN YANG ET AL: "Progress in polyketone materials: blends and composites : Progress in polyketone materials", POLYMER INTERNATIONAL, vol. 67, no. 11, 1 November 2018 (2018-11-01), GB, pages 1478 - 1487, XP055582041, ISSN: 0959-8103, DOI: 10.1002/pi.5624

## Description

### TECHNICAL FIELD

The present disclosure relates to a fibre-reinforced thermoplastic unidirectional (UD) tape, to a method of preparing the fibre-reinforced thermoplastic UD tape and to a use of the fibre-reinforced thermoplastic UD tape. The present disclosure further relates to a reinforced thermoplastic pipe (RTP) comprising the fibre-reinforced thermoplastic UD tape.

### Background

Introduced more than a half century ago, fibre-reinforced polymer compositions are composite materials with a wide range of applications in industry, for example in the automotive industry. The term "composite" can apply to any combination of individual materials, for example to a thermoplastic polymer (the matrix) in which fibres (reinforcing filler) have been dispersed. The reinforced plastics industry has used glass fibres in different forms for reinforcing polymer matrices to produce a diversity of products.

An example of the variety of products are fibre-reinforced thermoplastic unidirectional (UD) tapes. Fibre-reinforced thermoplastic UD tapes are endless tapes that are reinforced with continuous fibres, wherein the fibres, e.g., glass, basalt, or carbon fibres, are unidirectionally aligned and embedded (dispersed) in a thermoplastic matrix material of the tape. The matrix material comprises one or more thermoplastic materials. Typical examples of thermoplastic materials that are used are polyetheretherketone (PEEK) or polyetherketoneketone (PEKK). These thermoplastic aromatic polyetherketone materials have relatively high melting temperatures making them suitable for use in reinforced thermoplastic pipes (RTPs).

RTPs have high strength due to the reinforcement of the fibres making it possible to use them instead of metallic pipes for a variety of applications in which metal pipes are currently used. Pipelines based on metallic materials have the drawbacks that they are highly sensitive to corrosion, that they are heavy and inflexible. The RTPs are excellent substitutes for these metal pipes because they are non-corrosive and, when based on thermoplastic materials such as PEEK or PEKK, have excellent resistance to high temperatures and chemicals. This makes the RTPs suitable for transporting (hot) hydrocarbons fluids. Another benefit is that RTPs are flexible and hence spoolable on reels, enabling easy transportation, easy installation, and very low maintenance requirements. Another advantage is that these materials are lighter than metal allowing for easy and cheaper transport. A drawback of thermoplastic materials like PEEK or PEKK (being aromatic polyketones), is that a relatively high processing temperature is required. Another disadvantage is that they are relatively expensive.

Polyvinylidene fluoride (PVDF), polyamides (PAs), and polyesters are also used as thermoplastic material in RTPs. However, most of these types of thermoplastic materials are less chemical and/or hydrolysis resistant and/or relatively expensive.

Other thermoplastic materials that are used in UD tapes for RTPs as alternative to the PEEK, PEKK, PVDF, polyamides, and polyesters are polyolefins, such as polyethylene (PE) and polypropylene (PP). These types of thermoplastic polymers are very attractive because they are relatively cheap. A major drawback however is that PE and PP have a relatively low melting temperature making them less suitable for applications that require materials with high temperature resistance, such as in the transportation of hot hydrocarbon fluids. Further, the polyolefin materials swell at temperatures above about 80°C when exposed to aliphatic and aromatic hydrocarbon liquids.

There exists a need for a thermoplastic material for UD tape that is relatively low in life cycle cost but is resistant to high temperatures and has improved chemical/hydrolysis resistance.

### Objective

It is therefore an objective of the present invention to provide for a fibre-reinforced thermoplastic UD tape that has high-temperature resistance and improved chemical and hydrolysis resistance in combination with improved cost efficiency, making these UD tapes suitable for all types of applications.

For some applications, the UD tape must be flame retardant. For example, a UD tape for RTPs must have a flame retardancy that allows safe transportation of chemicals, such as hydrocarbon fluids, as well as in the aerospace and transportation sectors.

It is therefore a specific objective of the present invention to provide for a fibre-reinforced thermoplastic UD tape that has high-temperature resistance, improved chemical and hydrolysis resistance, and improved flame-retardant properties in combination with improved cost efficiency.

### SUMMARY

In a first aspect, the invention relates to a fibre-reinforced thermoplastic unidirectional (UD) tape comprising a thermoplastic matrix material and unidirectionally aligned reinforcing fibres dispersed within the thermoplastic matrix material, wherein the thermoplastic matrix material comprises one or more aliphatic polyketones (POK).

This type of fibre-reinforced thermoplastic UD tape can be easily manufactured at relatively low costs, is resistant to high temperatures, has improved hydrolysis and chemical resistance to gases and liquids. For example, it is resistant to swelling and degradation by typical ingredients found in oil fluids, viz. liquid hydrocarbons, water, CH₄, CO₂ and H₂S. This makes such type of thermoplastic matrix material very attractive for use in UD tapes.

Additionally, the thermoplastic matrix material itself is resistant to said fluids at temperatures above 85°C, preferably above 90°C, more preferably over 100°C for a period of 30 years or longer. Further, the thermoplastic matrix material must show low permeability to water and said gases. This is particularly important when the reinforcement is glass fibre whose strength can be reduced by water and acids.

Hence, this material will close a gap in the market for high-heat applications below higher end versions with for example PEEK and PEKK as thermoplastic matrix material with cost efficiency.

POK is a natural flame retardant and a char-forming polymer, which makes it an excellent choice for a thermoplastic matrix material to make flame retardant UD tapes.

The UD tape according to the first aspect of the invention is very suitable for use in applications like pipes, such as reinforced thermoplastic pipes (RTPs), pressure vessels, automotive components, electrical & electronics, consumer appliances and other high-heat applications.

Furthermore, the UD tape according to the first aspect of the invention is melt and powder impregnable, which enables the use of melt impregnation and powder scattering in the manufacturing of the fibre-reinforced thermoplastic UD tape.

In a second aspect, the invention relates to a method of manufacturing a fibre-reinforced thermoplastic UD tape according to the first aspect of the present invention, said method comprising:
- melt impregnation by contacting the unidirectionally aligned reinforcing fibres with a molten thermoplastic matrix material; or
- powder scattering by applying the thermoplastic matrix material in powder form on the unidirectionally aligned reinforcing fibres.

In a third aspect, the invention relates to a use of the fibre-reinforced thermoplastic UD tape according to the first aspect of the present invention or prepared according to the second aspect of the present invention for a reinforced thermoplastic pipe (RTP).

In a fourth aspect, the invention relates to a reinforced thermoplastic pipe (RTP) comprising from the centre to the periphery a thermoplastic inner liner, a reinforcement layer comprising the fibre-reinforced thermoplastic UD tape according to the first aspect of the present invention or prepared according to the second aspect of the present invention, and a thermoplastic outer jacket. The outer jacket protects the reinforcement layer comprising the fibre-reinforced thermoplastic UD.

Corresponding embodiments disclosed below for the first aspect are also applicable for the method of preparing (second aspect) and the use of the fibre-reinforced thermoplastic UD tape (third aspect), and to the RTP comprising the fibre-reinforced thermoplastic UD tape (fourth aspect) according to the present invention, unless stated otherwise.

### BRIEF DESCRIPTION OF DRAWINGS

The present invention is described hereinafter with reference to the accompanying drawings in which embodiments of the present invention are shown and in which like reference numbers indicate the same or similar elements. The invention is in no manner whatsoever limited to the embodiments disclosed therein.
- Figure 1: shows a schematic cross-section of a reinforced thermoplastic pipe (RTP) comprising the UD tape according to the present invention;
- Figure 2a: shows a method of manufacturing of a fibre-reinforced UD tape according to the present invention;
- Figure 2b: shows another method of manufacturing of a fibre-reinforced UD tape according to the present invention.

### DETAILED DESCRIPTION - EMBODIMENTS

The present invention is elucidated below with a detailed description.

### Thermoplastic matrix material

### Aliphatic polyketones (POKs)

In the present description, with "aliphatic polyketone" is meant a polyketone comprising aliphatic comonomer(s) (POK), such as carbon monoxide, ethylene, and propylene monomers, according to the structure below:

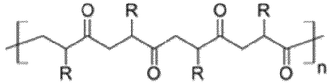

In the present description, with "POK" is meant a polyketone polymer that is built from aliphatic comonomers. POKs are a family of thermoplastic polymers comprising polar ketone groups in the polymer backbone. They are prepared by polymerizing carbon monoxide with an olefin as comonomer (e.g., ethylene). POK come in different types depending on 1) the number of comonomers and; 2) the types of comonomer(s). When one olefin comonomer is used the term copolymer is often used and when two olefin comonomers are used the term terpolymer is often used.

The two most common types of aliphatic POK are copolymers built from the monomers carbon monoxide and ethylene (R being hydrogen), and terpolymers built from the monomers carbon monoxide, ethylene, and a second olefin comonomer which can be propylene, butylene (e.g. 1-butene), hexylene, octene, or dodecene (in the comonomers, R is methyl, butyl, hexyl, octyl, or dodecyl).

POK have polar ketone groups in the polymer backbone and the presence of these ketone groups provides strong attraction between polymer chains, which increases the material's melting point: about 260 °C for the copolymer (having carbon monoxide and ethylene monomers) and about 220 °C for the terpolymer (having carbon monoxide, ethylene, and propylene monomers).

In the present description, with "thermoplastic matrix material" is meant a thermoplastic polymer material that forms the matrix of the fibre-reinforced thermoplastic composite.

In embodiment of the first aspect of the present invention, the thermoplastic matrix material comprises one or more POK selected from the group consisting of copolymers comprising monomers of carbon monoxide and ethylene, and terpolymers comprising monomers of carbon monoxide, ethylene and a second hydrocarbon of at least three carbon atoms, particularly an alpha-olefin such as propylene, butylene (e.g. 1-butene), hexylene, octene, or dodecene, and optionally one or more PEK selected from the group of polyaryletherketone (PAEK), such as polyetheretherketone (PEEK) and polyetherketoneketone (PEKK) - discussed below in the section on aromatic polyether ketones. These POK improve the high-heat rigidity, melt flow rate (MFR) and viscosity of the thermoplastic matrix material. Another advantage is that they improve the chemical resistance of the fibre-reinforced thermoplastic UD tape against hydrocarbons, water/hydrolysis, acids, and gasses.

In yet another embodiment, the thermoplastic matrix material comprises between 20 and 100 wt.%, preferably between 25 and 90 wt.%, more preferably at least 60 wt.%, most preferably at least 70 wt.% of one or more POK, based on the total weight of the thermoplastic matrix material. The thermoplastic matrix material comprising such a high amount of POK strongly reduces the material costs.

The one or more POK as used in the present invention may have:
- a melt mass-flow rate (MFR) of at least 60 g/10min, preferably at least 100 g/10min, more preferably at least 150 g/10min, most preferably between 60 and 200 g/10min measured at 240 °C with a load of 2.16 kg according to ASTM D1238-23; and/or
- a viscosity of at most 100 Pa·s, preferably at most 70 Pa·s, measured at 240 °C according to ISO 6721.

A polymer having such properties makes it extremely suitable for the application in UD tape.

### Aromatic polyetherketones (PEKs)

In the present description, with "aromatic polyetherketone" is meant a polyetherketone comprising comonomer(s) having aromatic groups (PEK). PEKs are polymers whose backbone contain alternating ketone (R-CO-R) and ether (R-O-R) functionalities. The most common are PAEKs.

In the present description, with "PAEK" is meant polyaryletherketone. This is a family of PEK whose molecular backbone contains alternately ketone (Aryl-CO-Aryl) and ether groups (Aryl-O-Aryl), wherein Aryl is a 1,4-substutited aryl group. These polymers are semi-crystalline thermoplastics with high-temperature stability and high mechanical strength.

In the present description, with "PEEK" is meant polyetheretherketone according to the structure below:

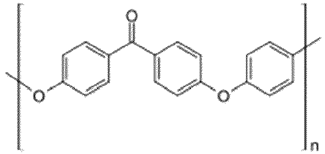

PEEK is a PEK, more specifically of the PAEK family. PEEK is a semicrystalline thermoplastic with excellent mechanical and chemical resistance properties that are retained to high temperatures. The processing conditions used to mold PEEK can influence the crystallinity and hence the mechanical properties.

In the present description, with "PEKK" is meant polyetherketoneketone according to the structure below:

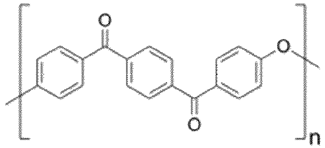

PEKK is also a PEK, more specifically of the PAEK family. PEKK is a semicrystalline thermoplastic with excellent mechanical and chemical resistance properties that are retained to high temperatures.

In an embodiment of the first aspect of the present invention, the thermoplastic matrix material comprises one or more aromatic polyketones (PEK), such as PEEK and PEKK. Due to the properties of these PEKs, they are suitable for use in reinforced thermoplastic pipes (RTPs).

### Other thermoplastic polymers

The thermoplastic matrix material may further comprise one or more additional polymers selected from the group consisting of polyamides, polyolefins, polyphenylene sulphide (PPS), polyethersulfone (PES), and polyetherimide (PEI).

In the present description, with "polyamides" is meant a polymer comprising amide bonds. There are several types of polyamides, such as aliphatic polyamides, aromatic polyamides or polyphthalamides.

In the present description, with "polyolefins" is meant a polymer of olefin monomers, having the general formula (CH₂CHR)ₙ where R is an alkyl group. Examples are polypropylene and polyethylene or copolymers thereof.

In the present description, with "PPS" is meant polyphenylene sulphide. This is a thermoplastic polymer consisting of aromatic rings linked by sulphides.

In the present description, with "PES" is meant polyethersulfone according to the structure below. This is a thermoplastic polymer comprising ether bonds, aromatic rings, and sulfone bonds in the backbone:

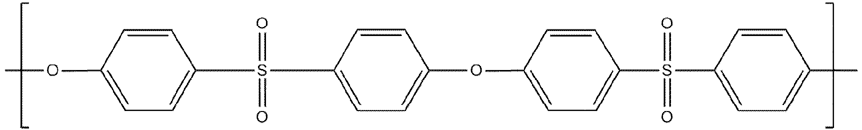

In the present description, with "PEI" is meant polyetherimide. This is a high-temperature thermoplastic polymer just like PEEK. Compared to PEEK, it has a lower impact strength. PEI contains phthalimide and bisphenol A subunits. It has the following structure:

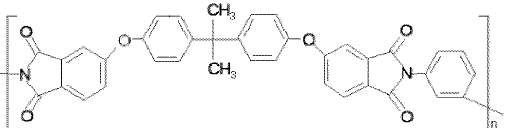

In the present description, with "PVDF" is meant polyvinylidene fluoride, being a fluorinated type of polyolefin. It has the following structure:

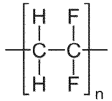

### Unidirectional (UD) tape

Preferably, the fibre-reinforced thermoplastic UD tape has a width of at least 2 cm and or has a thickness of between 0.10 and 0.80 mm, preferably between 0.15 and 0.50 mm, more preferably between 0.25 and 0.35 mm. A UD tape of these dimensions provides optimal balance between flexibility and applicability and strength. This makes them particularly suitable for the production of complex component shapes. Furthermore, the low thickness of the UD tape allows that the reinforced thermoplastic pipes only increase a very small amount in thickness.

In the present description, with "unidirectional (UD) tape" is meant a tape that comprises endless fibre-reinforced tapes of different widths with unidirectionally aligned reinforcing fibres. In UD tapes, fibres, such as glass fibres or carbon fibres, are embedded so ideally in a thermoplastic matrix that completely new possibilities arise in the production of components. Despite their low thickness, UD tapes have a high level of stability and are also particularly light. In addition, UD tapes can be processed efficiently and, depending on the combination and additives present, are flame retardant. Furthermore, the UD tape is collected and stored on rolls and hence it can be cut to length and width according to the application. Another important property of thermoplastic UD tape is the possibility of recycling.

### Additives

In addition to one or more POKs and/or one or more PEKs and/or one or more other thermoplastic polymers, one or more additives may be present in the thermoplastic matrix material as used in the present invention. The one or more additives is selected from the group consisting of compatibilizers, stabilizers, impregnation agents, lubricants, antioxidants, and flame retardants.

In the present description, with "additives" is meant an additive for the thermoplastic polymers used that may be present in the thermoplastic matrix material. Additives are often used to improve the properties of the thermoplastic polymers. Examples include compatibilizers and stabilizers.

In the present description, with "compatibilizers" is meant an additive that aids in the compatibility between two different thermoplastic polymers. Examples include block or graft copolymers. Suitable compatibilizers may be added to improve compatibility of POK with other polymers.

Block copolymers comprise of two or more homopolymer subunits linked by covalent bonds. They are made up of blocks of different polymerized monomers. Examples are diblock copolymers, which have two distinct blocks (e.g., ~A-A-A-A-A-B-B-B-B-B~), and triblock copolymers, which have three distinct blocks (e.g., ~A-A-A-A-B-B-B-B-C-C-C-C~).

Graft copolymers are segmented copolymers with a linear backbone of one chain segment and randomly distributed branches of another chain segment, which is structurally different from the former chain segment forming the linear backbone.

In the present description, with "stabilizers" is meant an additive that aids in the prevention of heat, oxidation, and chemical degradation of the fibre-reinforced thermoplastic composite. Examples include phenolic alkylene dicarboxylates that provide stabilization against degradation with a reduced tendency to yellow discoloration and improved melt, processing performance over an extended period of time, aluminium phosphate or aluminium silicate treated with polyethylene glycol that improves the colour stability of the material, and zinc oxide or lead stabilizer that also improves the colour stability and furthermore improves the thermal stability of POK and its processing temperature window.

In the present description, with "impregnation agent" or "impregnating agent" is meant a material that is compatible with the thermoplastic polymer to be reinforced and may even be soluble in said polymer. The skilled person can select suitable combinations based on general knowledge, and may also find such combinations in the art.

Suitable examples of impregnating agents include low molar mass compounds, for example low molar mass or oligomeric polyurethanes, polyesters such as unsaturated polyesters, polycaprolactones, polyethyleneterephthalate, poly(alpha-olefins), such as highly branched polyethylenes and polypropylenes, polyamides, such as nylons, and other hydrocarbon resins.

Preferably, the impregnating agent is non-volatile, and/or substantially solvent-free. In the context of the present invention, non-volatile means that the impregnating agent has a boiling point or range higher than the temperatures (about 230-240 °C) at which the POK's melt impregnation is conducted over the reinforcing fibres. In the context of present invention, "substantially solvent- free" means that impregnating agent contains less than 10 wt.% of solvent, preferably less than 5 wt.% of solvent based on the impregnating agent. In a preferred embodiment, the impregnating agent does not contain any organic solvent.

In the present description, with "lubricants" is meant a material that helps to reduce friction between surfaces in mutual contact, which ultimately reduces the heat generated when the surfaces move. Examples are stearamides and stearates, such as EBS, calcium stearate or magnesium stearate.

In the present description, with "antioxidants" is meant a compound that inhibits oxidation, a chemical reaction that can produce free radicals. The antioxidant additive may comprise one, two or more phenolic groups. These phenolic antioxidant additives may be sterically hindered phenolic additives. Examples are tris(2,4-di-tert-butylphenyl)phosphite, commercially available as Irgafos 168, and octadecyl-3-[3,5-di-tert-butyl-4-hydroxyphenyl]propionate, available from BASF as Irganox 1076.

In the present description, with "flame retardants" is meant a material that is activated by the presence of an ignition source and is intended to prevent or slow the further development of ignition by a variety of different physical and chemical methods. They may be added as a copolymer during the polymerisation process, or later added to the polymer at a moulding or extrusion process or applied as a topical finish. Examples are minerals such as aluminium hydroxide (ATH), magnesium hydroxide (MDH), huntite and hydromagnesite, organohalogen compounds such as organochlorines, organobromines, and polymeric brominated compounds, organophosphorus compounds such as organophosphates, phosphonates, and phosphinates, and organic compounds such as carboxylic acid and dicarboxylic acid.

### Reinforcing fibres

Reinforcing fibres are dispersed in the thermoplastic material such that they are unidirectionally aligned in the thermoplastic material in order to obtain the fibre-reinforced thermoplastic UD tape according to the first aspect of the invention. The unidirectionally aligned reinforcing fibres may be selected from the group consisting of glass fibres, carbon fibres, basalt fibres, ceramic fibres, aramid fibres, hemp fibres, flax fibres, sisal fibres, and one or more combinations thereof, preferably glass fibres, carbon fibres and/or basalt fibres, more preferably glass fibres and/or basalt fibres. This broad range of types of fibres that are suitable for reinforcing the thermoplastic matrix material provides extra flexibility to the manufacturing process and makes it less dependent on one or a few types of fibres.

Embodiments comprising glass fibres, carbon fibres and/or basalt fibres and/or comprising at least 20 wt.% of the one or more POK, preferable at least 40 wt.%, more preferably at least 50 wt.%, based on the total weight of the thermoplastic matrix material, have the advantage that the flame retardancy of the UD tape is improved enabling that the UD tapes can be used in applications for which the UD tape must have a high flame retardancy.

In an embodiment, the UD tape consists of the unidirectionally aligned reinforcing fibres and the thermoplastic matrix material.

In an embodiment, the unidirectionally aligned reinforcing fibres are basalt fibres. In a specific embodiment, the unidirectionally aligned reinforcing fibres are basalt fibres and the thermoplastic matrix material consists of 100 wt.% of the one or more POK, based on the total weight of the thermoplastic matrix material.

In the present description, with "unidirectionally aligned reinforcing fibres" is meant that substantially all fibres, preferably all fibres, are aligned in a single direction. In the present description, with "single direction" is meant the longitudinal direction of the UD tape, i.e., the machine direction in which the UD tape is produced.

In the present description, with "parallel aligned continuous multifilament strands" is meant that the reinforcing fibres are continuous strands of fibres that are positioned in parallel to each other in the longitudinal direction of the UD tape. The fibres in the fibre-reinforced thermoplastic UD tape are generally supplied as a plurality of continuous, very long filaments, and can be in the form of strands, rovings, or yarns.

A filament is an individual fibre of reinforcing material. A strand is a plurality of bundled filaments. Yarns are collections of strands, for example strands twisted together. A roving refers to a collection of strands wound into a package.

In the present description, with "reinforcing fibres" is meant fibres that are added to the thermoplastic matrix material with the purpose of improving the matrix material's strength. In other words, fibres that reinforce the matrix material.

In the present description, with "glass fibres" is meant a material that consists of numerous extremely fine fibres of glass. Thin strands of silica-based or other formulation glass are extruded into many fibres with small diameters suitable for textile processing.

The most common type of glass fibre is E-glass, which is alumino-borosilicate glass. E-glass has less than 1 wt.% alkali oxides and is mainly used for glass-reinforced plastics. Other types of glass used are A-glass (alkali-lime glass with little or no boron oxide), E-CR-glass (Electrical/Chemical Resistance; alumino-lime silicate with less than 1 wt.% alkali oxides, with high acid resistance), C-glass (alkali-lime glass with high boron oxide content, used for glass staple fibres and insulation), D-glass (borosilicate glass, named for its low dielectric constant), R-glass (alumino silicate glass without MgO and CaO with high mechanical requirements as reinforcement), and S-glass (alumino silicate glass without CaO but with high MgO content with high tensile strength).

In the present description, with "carbon fibres" is meant carbon fibres (alternatively CF or graphite fibre) having a diameter of about 5 to 10 micrometres that are composed mostly of carbon atoms, arranged in a graphitic structure. Specifically, the graphene planes are oriented parallel to the carbon fibre's axis. Carbon fibres have several advantages: high stiffness, high tensile strength, high strength to weight ratio, high chemical resistance, high-temperature tolerance, and low thermal expansion. However, they are relatively expensive compared to similar fibres, such as glass fibres and basalt fibres.

In the present description, with "basalt fibres" is meant fibres that are produced from basalt rocks by melting them and converting the melt into fibres. Basalt fibres, or more specifically basalt continuous fibres, can be used for the production of reinforcing materials and composite products. Basalt fibres are made from a single material, crushed basalt, from a carefully chosen quarry source. Basalt of high acidity (over 46% silica content) and low iron content is considered desirable for fibre production. Unlike with other composites, essentially no materials are added during its production: the basalt is simply washed and then melted. Basalt fibres are fire resistant and do not burn, which makes them very suitable as a reinforcing material in a fibre-reinforced thermoplastic UD tape that requires good flame retardancy.

Furthermore, when basalt fibres are used to strengthen polymers, its composites have good strength, high working temperature range, good chemical resistance, excellent heat and sound insulation properties and low water absorption. In addition, basalt fibres are easy to process, environmentally friendly, and relatively cheap.

In the present description, with "ceramic fibres" is meant fibres that are smalldimension filaments or threads composed of ceramic material, usually alumina and silica, used in lightweight units for electrical, thermal, and sound insulation. Mainly, ceramic fibres are of two types: ceramic oxide fibres and ceramic non-oxide fibres.

Ceramic oxide fibres mostly consist of alumina (Al₂O₃) and alumina-silica (Al₂O₃-SiO₂) mixtures and are generally used for high-temperature applications due to their high melting points. Ceramic oxide fibres are used both as insulation and as reinforcement material. The mostly known examples for oxide ceramic fibres are composed of oxides such as silica (SiO₂), mullite (3Al₂O₃·2SiO₂), alumina (Al₂O₃), and zirconia (ZrO₂) having different characteristic properties.

Production of non-oxide fibres is difficult due to their high melting points and resistance to densification. Oxidation resistance tends to be their main deficiency. Examples are silicon carbide-based fibres. Silicon carbide (SiC) fibres have an excellent combination of high strength, modulus, and thermal stability, including good oxidation resistance and mechanical properties (compressive-tensile strength) at high temperatures. Silicon carbide-based fibres are generally applied as continuous fibre in ceramic matrix. This type of ceramic matrix composites (CMCs) is used in hot section of engines for power, etc.

In the present description, with "aramid fibres" is meant aromatic polyamide fibres, which are a class of heat-resistant and strong synthetic fibres. The chain molecules in the fibres are highly oriented along the fibre axis. As a result, a higher proportion of the chemical bond contributes more to fibre strength than in many other synthetic fibres. Aramids have a very high melting point (>500 °C). Aromatic in the name refers to the presence of aromatic rings of six carbon atoms. In aramids these rings are connected via amide linkages each comprising a CO group attached to an NH group. Aramids are divided into two main types according to where the linkages attach to the rings: para-aramids and meta-aramids. Numbering the carbon atoms sequentially around a ring, para-aramids have the linkages attached at positions 1 and 4, while meta-aramids have them at positions 1 and 3. That is, the attachment points are diametrically opposite each other in para-aramids, and two atoms apart in meta-aramids.

In the present description, with "hemp fibres" is meant vegetable fibres that are generally based on arrangements of cellulose, often with lignin, derived from the hemp plant under the species Cannabis.

In the present description, with "flax fibres" is meant vegetable fibres that are extracted from the bast or skin of the stem of the flax plant (Linum usitatissimum L.).

In the present description, with "sisal fibres" is meant vegetable fibres that are derived from the plant under the species Agave Sisalana.

Whichever the reinforcement fibre chosen, the fibres should have a suitable size applied to them. The size is selected to protect the fibre during handling, but also to provide good adhesion to the thermoplastic matrix polymer, thereby increasing the strength of the UD tape. The size on the glass fibre has to be selected according to the thermoplastic matrix material. Thus, for the POK matrix material, the size for the reinforcing fibre, for example glass fibre or carbon fibre, is selected to maximise the strength of the UD tape, using the knowhow of those skilled in the art.

In the present description, with "distribution of fibres throughout the tape" is meant the distribution of the fibres over the width of the fibre-reinforced thermoplastic UD tape transverse to the longitudinal direction (i.e., machine direction) of the fibres. A relatively uneven distribution may result in the UD tape having undesirable and/or unpredictable structural characteristics. A relatively even distribution means that the continuous unidirectionally aligned fibres are evenly distributed in the UD tape and provides a UD tape having desirable and/or predictable structural characteristics. Preferably, the distribution of the fibres is relatively even.

In the present description, with "close to surface" is meant that the average distance between the top or bottom surface of the fibre-reinforced thermoplastic UD tape and the fibres embedded in the fibre-reinforced thermoplastic UD tape is between 5 and 20 % of the thickness of the fibre-reinforced thermoplastic UD tape.

Preferably, the unidirectionally aligned reinforcing fibres have a diameter of between 4 and 20 µm and/or a length of at least 100 mm, preferably at least 1000 mm. The fibres of this specific diameter and/or length provide sufficient strength to the UD tape over the whole length (in the longitudinal direction) of the UD tape. Furthermore, it also allows the preparation of a fibre-reinforced thermoplastic UD tape having a relatively low thickness.

In another embodiment, the unidirectionally aligned reinforcing fibres are aligned parallel to each other in the longitudinal direction. This improves the strength of the UD tape over the whole length (in the longitudinal direction) of the UD tape while maintaining the flexibility of the UD tape. In the present description, with "longitudinal direction" is meant the machine direction in which the UD tape is produced.

In yet another embodiment, the UD tape comprises between 10 and 74 wt.% of unidirectionally aligned reinforcing fibres, between 25 and 89 wt.% of thermoplastic matrix material and between 1 and 10 wt.% of additives, based on the total weight of the UD tape. The higher the fibre content in the UD tape, the higher the performance of the UD tape. However, a too high fibre content may lead to insufficient impregnation and/or problems with the mechanical strength of the UD tape, e.g., the integrity of the UD tape becomes poor, resulting in the UD tape falling apart.

### Conversion from thermoplast to thermoset

For some applications, it is desirable to convert the thermoplastic material to a thermoset material. This can for example be done via heat-induced cross-linking. The cross-linking of the thermoplastic matrix material is performed after production (shaping or moulding) of the article comprising the fibre-reinforced thermoplastic UD tape. POK is more suitable for this conversion than other thermoplastic polymers, such as PEEK and PA-12.

In an embodiment, the thermoplastic matrix material comprises one or more cross-linked POK. This is beneficial, as the UD tape is more resistant to creep, and this allows for the use above the melting point of the POK for short periods of time.

### Method for manufacturing fibre-reinforced thermoplastic UD tape

There exist various methods for producing fibre-reinforced UD tapes comprising POK and/or PEK. Two potential manufacturing methods are melt impregnation and powder scattering.

In an embodiment of the method according to the second aspect of the present invention, wherein melt impregnation is used, the method comprises the steps of:
a1) providing the unidirectionally aligned reinforcing fibres such that they are aligned parallel to each other in the longitudinal direction;
b1) heating the thermoplastic matrix material to melt;
c1) applying the thermoplastic matrix material in molten state to said unidirectionally aligned reinforcing fibres; and
d1) cooling to obtain the fibre-reinforced thermoplastic UD tape.

Step c1), wherein the polymer(s) is/are applied in molten state to the fibres, is also known as the impregnation step of the melt impregnation process. The fibres are impregnated by the molten polymer such that they are substantially completely covered by said polymer or polymers. A fibre-reinforced thermoplastic UD tape can be made with melt extrusion with a screw extruder, depositing melt over the unidirectionally aligned reinforcing fibres.

In another embodiment of the method according to the second aspect of the present invention, wherein powder scattering is used, the method comprises the steps of:
a2) providing the unidirectionally aligned reinforcing fibres such that they are aligned parallel to each other in the longitudinal direction;
b2) scattering the thermoplastic matrix material in powder form to said unidirectionally aligned reinforcing fibres;
c2) heating the thermoplastic matrix material to melt; and
d2) cooling to obtain the fibre-reinforced thermoplastic UD tape.

In yet another embodiment according to the second aspect of the invention, a multilayer fibre-reinforced thermoplastic UD tape (or: UD tape laminate) is manufactured that is comprised of two or more layers of UD tape. This method comprises the additional steps of:
e) stacking at least two layers of fibre-reinforced thermoplastic UD tape on top of each other;
f) heating said at least two layers to bring the thermoplastic matrix material into a molten state; and
g) cooling to obtain a multilayer fibre-reinforced thermoplastic UD tape.

In the present description, with "a multilayer fibre-reinforced thermoplastic UD tape" or "UD tape laminate" is meant that the final UD tape contains two or more layers of fibre-reinforced thermoplastic UD tape. This enables the manufacturing of a thicker reinforcing layer when required.

### Use

In an embodiment of the third aspect of the present invention, the fibre-reinforced thermoplastic UD tape according to the first aspect or prepared according to the second aspect is used for transporting of fluids, for example hydrocarbon fluids. In the present description, with "fluids" is meant liquids, such as water, and gasses, such as butane.

### Applications

In the present description, with "reinforced thermoplastic pipe (RTP)" is meant a multilayer pipe of thermoplastic material that is reinforced. Other names used are Flexible Composite Pipes, Thermoplastic Composite Pipes, Flexible Flowline, Flexible Line Pipe, Spoolable Reinforced Plastic Line Pipe, Flexible Reinforced Pipe, Reinforced Line Pipe or Spoolable Composites. For offshore use other names include Offshore Flexibles or Flexible Umbilical Risers. According to the present invention, an RTP includes from the centre of the RTP to the periphery of the RTP at least the following layers: a thermoplastic inner liner, a reinforcement layer, and a thermoplastic outer jacket. The outer jacket provides protection of the reinforcing UD tape windings from external mechanical damage.

In the present description, with "UD tape windings" is meant the fibre-reinforced thermoplastic UD tape that is provided on (wound around) the thermoplastic inner liner. With "fibre-reinforced thermoplastic UD tape" is meant the thermoplastic UD tape provided with fibres that reinforce the thermoplastic UD tape.

In the present description, with "thermoplastic inner liner" is meant the inner layer of the RTP that is made of a thermoplastic material, such as PVDF, PPS, POK, PA-11, PA-12, PE, and PP. To prevent damage to the RTP, the thermoplastic inner liner must be made from a material that is resistant to chemicals, such as gaseous or liquid hydrocarbons, which are transported through the RTP. Preferably, the thermoplastic inner liner is also resistant to high temperatures. With "high temperatures" is meant the temperature of the fluids that flow through the RTP, being in the range of above 85 °C, preferably above 90 °C, more preferably above 100 °C.

In the present description, with "reinforcement layer" is meant the layer between the thermoplastic inner liner and the thermoplastic outer jacket that is formed by the fibre-reinforced thermoplastic UD-tape. The reinforcement layer provides additional strength to the pipe, hence the name "reinforced thermoplastic pipe (RTP)".

In the present description, with "thermoplastic outer jacket" is meant the outer jacket, layer or cover of the RTP that is made of a thermoplastic material, such as PDVF, PPS, POK, PA-11, PA-12, PE, and PP. To prevent damage to the RTP, the thermoplastic outer jacket must be made from a material that is resistant to impact and one or more of the following, UV light, high temperatures, water. With "high temperatures" is meant the temperature of the fluids that flow through the RTP, being in the range of above 85 °C, preferably above 90 °C, more preferably above 100 °C.

In addition, the thermoplastic outer jacket must be made of a material that is sufficiently strong to prevent damage from the surroundings to the RTP.

### DETAILED DESCRIPTION OF DRAWINGS

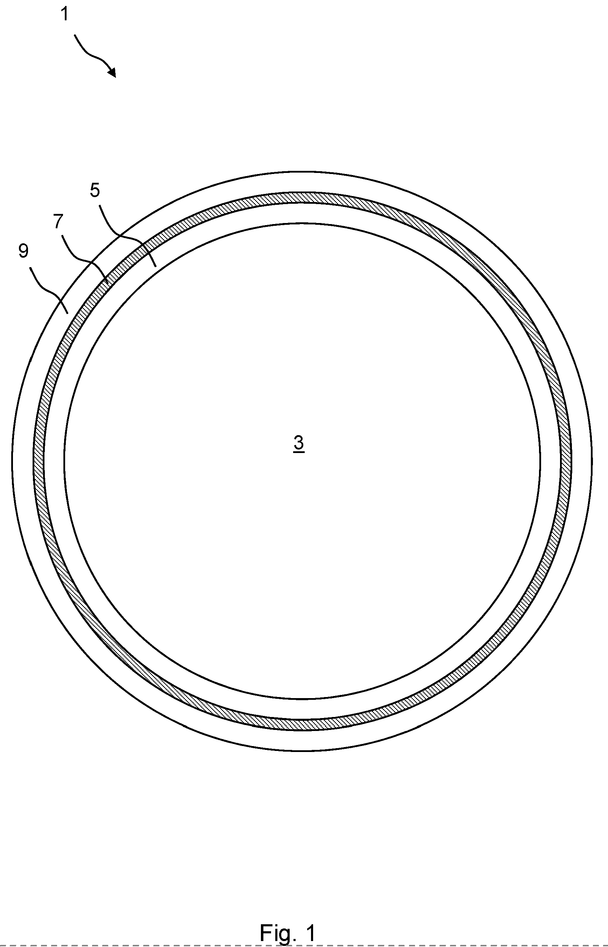

Fig. 1 shows a cross-sectional view of a reinforced thermoplastic pipe (RTP) 1 comprising from the centre 3 of the RTP, being the inside of the RTP, to the periphery a thermoplastic inner liner 5, a reinforcement layer 7 comprising the fibre-reinforced thermoplastic UD tape according to the first aspect of the present invention or prepared according to the second aspect of the present invention, and a thermoplastic outer jacket 9. The RTP as shown in Fig. 1 can be used for transporting hydrocarbon fluids.

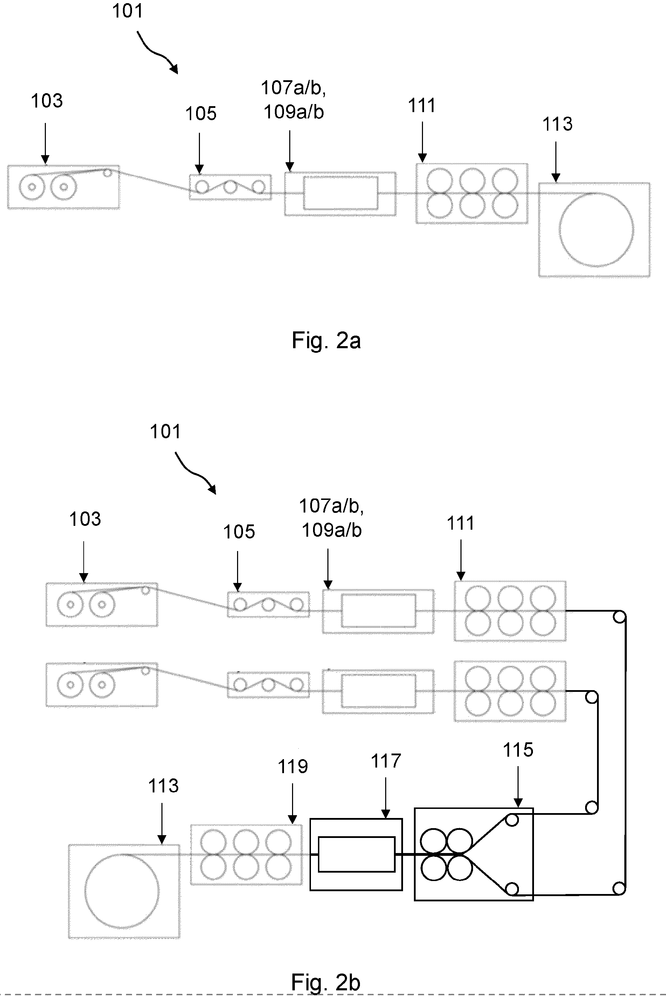

Fig. 2a shows a manufacturing method 101 a fibre-reinforced thermoplastic UD tape according to the present invention. Said method comprises the steps:
   Step a1) or a2): In said method 101, the unidirectionally aligned reinforcing fibres are provided by taking 103 the individual fibre strands from one or more creels and spreading 105 them by a fibre spreader such that the unidirectionally aligned fibres are aligned parallel to each other in the longitudinal direction;
   Steps b1) and c1): In case of melt impregnation, the thermoplastic matrix material is first heated 107a to melt and then in molten state applied 109a to the unidirectionally aligned fibres to obtain a hot fibre-reinforced thermoplastic UD tape. In step c1), the hot fibre-reinforced thermoplastic UD tape is squeezed and pulled through hot rollers such that lateral pressure is applied on the UD tape;
   Steps b2) and c2): In case of powder scattering, the thermoplastic matrix material is first scattered 109b in powder form to the unidirectionally aligned fibres and then the powder-scattered unidirectionally aligned fibres are heated 107b to melt the thermoplastic matrix material to obtain a hot fibre-reinforced thermoplastic UD tape. In step c2), the hot fibre-reinforced thermoplastic UD tape is squeezed and pulled through hot rollers such that lateral pressure is applied on the UD tape;
   Step d1) or d2): After the step of heating 107a and applying 109a or scattering 109b and heating 107b, the resulting hot fibre-reinforced thermoplastic UD tape is cooled 111 by pulling said hot fibre-reinforced thermoplastic UD tape over/through rollers to obtain the fibre-reinforced thermoplastic UD tape according to the present invention and wound 113 on a spool.
Fig. 2b shows the method steps of the method described above (and shown in Fig. 2a) comprising the additional steps of:
   Step e): After the step of cooling 111, two fibre-reinforced thermoplastic UD tapes are stacked 115 on top of each other;
   Step f): After stacking 115, the stacked fibre-reinforced thermoplastic UD tapes are heated 117 to bring the thermoplastic matrix material into a molten state. In this step f), the hot stacked fibre-reinforced thermoplastic UD tapes are squeezed and pulled through hot rollers such that lateral pressure is applied on the stack of UD tapes;
   Step g): After the step of heating 117, the resulting hot stack of fibre-reinforced thermoplastic UD tapes is cooled 119 by pulling said hot stack of fibre-reinforced thermoplastic UD tapes over/through rollers to obtain a multilayer fibre-reinforced thermoplastic UD tape.

### EXAMPLES

The present invention is further elucidated based on the example below which is illustrative only and not considered limiting to the present invention. Those skilled in the art will readily recognize a variety of noncritical parameters that can be changed or modified to yield essentially the same results.

### Example 1

A fibre-reinforced thermoplastic UD tape was manufactured by melt impregnation.

First, a tow of glass fibres (CPIC 4303) was provided, said fibres having a fibre diameter of between 10 and 20 µm (nominal diameter was 13 µm) and a tow diameter of between 3 and 10 mm or having a fibre count of 1200 g/m². Said tow was spread into a spreaded fibre layer such that the glass fibres were unidirectionally aligned parallel to each other in the longitudinal direction, i.e., machine direction. Meanwhile, a thermoplastic matrix material in molten state was prepared by heating a polymer resin to melt. Said polymer resin (Hyosung POK_M930F) had a melt mass-flow rate (MFR) of 220 g/10min measured at 240 °C with a load of 2.16 kg according to ASTM D1238-23. Said molten resin was applied (via extrusion) at a temperature of 280 °C to the unidirectionally aligned reinforcing fibres such that the fibres were completely covered, in other words impregnated, by the molten thermoplastic matrix material. The unidirectionally aligned reinforcing fibres covered with molten resin was subsequently squeezed and pulled through rollers such that lateral pressure was applied on said reinforcing fibres to obtain a hot fibre-reinforced thermoplastic UD tape.

Third, the hot fibre-reinforced thermoplastic UD tape was cooled via cold roller at a temperature of 40 °C in order to obtain the fibre-reinforced thermoplastic UD tape. Finally, the fibre-reinforced thermoplastic UD tape was wound on a spool to enable easy transport of the UD tape.

### Analysis of UD tapes

The resulting fibre-reinforced thermoplastic UD tape of Example 1 had a fibre weight content of 59.59 %, based on the total weight of the fibre-reinforced thermoplastic UD tape, which corresponds to a fibre volume content of 41 %. The properties of the fibre-reinforced thermoplastic UD tape are provided in Table 1.

**Table 1. Comparison of UD tape of present invention**

| | **ASTM/ISO** | **Example 1** |
|---|---|---|
| Item name | | GPOK60-1129 |
| Fibre content [wt.%] | ISO 1172 | 59.59 |
| Polymer content [wt.%] | ISO 1172 | 40.41 |
| Thickness [mm] | | 0.284 |
| Areal density [g/m²] | | 498 |
| Density [g/cm³] | ISO 1183 | 1.789 |
| Tensile strength [MPa] | ASTM D3039 * | 597 [measured on UD tape] |
| Flexural strength [MPa] | ISO 14125 | 755.2 [measured on laminate **] |
| Flexural modulus [MPa] | ISO 14125 | 27892 [measured on laminate **] |
| ILSS [MPa] | ASTM D2344 | 48.9 [measured on laminate **] |

| | | |
|---|---|---|
| * There is no official test standard for tensile test on composite tapes. This test was based on ASTM D3039 which is for tensile test on laminates. Sample size: 250 mm x 15 mm; test speed: 2 mm/min. ** Lamination conditions: temperature: 230 °C; pressure: 0.75 MPa; pre-heat time: 10 min; heat time: 10 min; cool time: 20 min. | | |

From Table 1, it can be concluded that Example 1 has a tensile strength, flexural strength, flexural modulus, and ILSS that are comparable to UD tapes made with a thermoplastic matrix material based conventional polymers like PEEK or PEKK. However, the POK's relatively high melting temperature (MFR of 220 g/10min) enables to use the material in a fibre-reinforced thermoplastic UD tape in an RTP that transports hot fluids, e.g., hydrocarbons. This in contrast to PE and PP, which have too low melting temperatures making those materials less suitable for application in RTPs that transport hot fluids. Furthermore, the presented data are found to be substantially the same as compared to fibre-reinforced thermoplastic UD tapes known in the field, such as PEK-based UD tapes.

The present inventors have observed that impregnation quality, fibre spreading, and tensile strength and other mechanical properties are sufficient to good. In addition, the present inventors have observed that the mechanical properties of the thermoplastic matrix material are better retained in the final product when using the matrix material of the present invention compared to polyolefins.

Furthermore, the results presented above show that fibre-reinforced thermoplastic UD tapes made with POK as thermoplastic matrix material can be made via melt impregnation and it also provides a strong indication that preparing the UD tape via powder scattering is possible as well.

This indicates that the relatively cheap POK is a very suitable alternative for the expensive PEK, e.g., PEEK.

Modifications and additions to the methods and examples disclosed above are obvious to those skilled in the art and covered by the scope of the appended claims. Embodiments and examples of the first aspect of the present invention are also applicable to the second or further aspects of the present invention.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage. Any reference signs in the claims should not be construed as limiting the scope thereof. The scope of the present invention is defined by the appended claims. One or more of the objects of the invention are achieved by the appended claims.

## Claims

1. A fibre-reinforced thermoplastic unidirectional (UD) tape comprising a thermoplastic matrix material and unidirectionally aligned reinforcing fibres dispersed within the thermoplastic matrix material, wherein the thermoplastic matrix material comprises one or more aliphatic polyketones (POK).

2. The fibre-reinforced thermoplastic UD tape according to claim 1, wherein the thermoplastic matrix material further comprises one or more aromatic polyketones (PEK).

3. The fibre-reinforced thermoplastic UD tape according to claim 1 or 2, wherein the thermoplastic matrix material comprises one or more POK selected from the group consisting of copolymers comprising monomers of carbon monoxide and ethylene, and terpolymers comprising monomers of carbon monoxide, ethylene and a second hydrocarbon of at least three carbon atoms, particularly an alpha-olefin such as propylene, butylene, hexylene, octene, or dodecene, and optionally one or more PEK selected from a group of polyaryletherketone (PAEK), such as polyetheretherketone (PEEK) and polyetherketoneketone (PEKK).

4. The fibre-reinforced thermoplastic UD tape according to any of the preceding claims, having a width of at least 2 cm and/or having a thickness of between 0.10 and 0.80 mm, preferably between 0.15 and 0.50 mm, more preferably between 0.25 and 0.35 mm.

5. The fibre-reinforced thermoplastic UD tape according to any of the preceding claims, wherein the thermoplastic matrix material comprises between 20 and 100 wt.%, preferably between 25 and 90 wt.%, more preferably at least 60 wt.%, most preferably at least 70 wt.% of the one or more POK, based on the total weight of the thermoplastic matrix material.

6. The fibre-reinforced thermoplastic UD tape according to any of the preceding claims, wherein the thermoplastic matrix material further comprises one or more additional polymers selected from the group consisting of polyamides, polyolefins, polyphenylene sulphide (PPS), polyethersulfone (PES), and polyetherimide (PEI).

7. The fibre-reinforced thermoplastic UD tape according to any of the preceding claims, wherein the thermoplastic matrix material further comprises one or more additives selected from the group consisting of compatibilizers, stabilizers, impregnation agents, lubricants, antioxidants, and flame retardants.

8. The fibre-reinforced thermoplastic UD tape according to any of the preceding claims, wherein the one or more POK has:
- a melt mass-flow rate (MFR) of at least 60 g/10min, preferably at least 100 g/10min, more preferably at least 150 g/10min, most preferably between 60 and 200 g/10min measured at 240 °C with a load of 2.16 kg according to ASTM D1238-23; and/or
- a viscosity of at most 100 Pa·s, preferably at most 70 Pa·s, measured at 240 °C according to ISO 6721.

9. The fibre-reinforced thermoplastic UD tape according to any of the preceding claims, wherein the UD tape comprises between 10 and 74 wt.% of unidirectionally aligned reinforcing fibres, between 25 and 89 wt.% of thermoplastic matrix material and between 1 and 10 wt.% of additives, based on the total weight of the UD tape.

10. The fibre-reinforced thermoplastic UD tape according to any of the preceding claims, wherein the unidirectionally aligned reinforcing fibres are selected from the group consisting of glass fibres, carbon fibres, basalt fibres, ceramic fibres, aramid fibres, hemp fibres, flax fibres, sisal fibres, and one or more combinations thereof, preferably glass fibres, carbon fibres and/or basalt fibres, more preferably glass fibres and/or basalt fibres.

11. The fibre-reinforced thermoplastic UD tape according to any of the preceding claims, wherein the unidirectionally aligned reinforcing fibres have a diameter of between 4 and 20 µm and/or a length of at least 100 mm, preferably at least 1000 mm.

12. The fibre-reinforced thermoplastic UD tape according to any of the preceding claims, wherein the unidirectionally aligned reinforcing fibres are aligned parallel to each other in a longitudinal direction.

13. The fibre-reinforced thermoplastic UD tape according to any of the preceding claims, wherein the UD tape comprises one or more cross-linked POK.

14. A method of manufacturing a fibre-reinforced thermoplastic UD tape according to any of the preceding claims, said method comprising:
- melt impregnating by contacting the unidirectionally aligned reinforcing fibres with a molten thermoplastic matrix material; or
- powder scattering by applying the thermoplastic matrix material in powder form on the unidirectionally aligned reinforcing fibres.

15. A use of the fibre-reinforced thermoplastic UD tape according to any of claims 1-13 or prepared according to the method according to claim 14 for a reinforced thermoplastic pipe (RTP), preferably for transporting of fluids.

16. A reinforced thermoplastic pipe (RTP) comprising from a centre to a periphery a thermoplastic inner liner, a reinforcement layer comprising the fibre-reinforced thermoplastic UD tape according to any of claims 1-13 or prepared according to the method according to claim 14, and a thermoplastic outer jacket.

## Patentansprüche

1. Faserverstärktes thermoplastisches unidirektionales (UD) Band, umfassend ein thermoplastisches Matrixmaterial und unidirektional ausgerichtete Verstärkungsfasern, die in dem thermoplastischen Matrixmaterial verteilt sind, wobei das thermoplastische Matrixmaterial ein oder mehrere aliphatische Polyketone (POK) umfasst.

2. Faserverstärktes thermoplastisches UD-Band nach Anspruch 1, wobei das thermoplastische Matrixmaterial weiter ein oder mehrere aromatische Polyketone (PEK) umfasst.

3. Faserverstärktes thermoplastisches UD-Band nach Anspruch 1 oder 2, wobei das thermoplastische Matrixmaterial ein oder mehrere POK, ausgewählt aus der Gruppe bestehend aus Copolymeren, die Monomere von Kohlenmonoxid und Ethylen umfassen, und Terpolymeren, die Monomere von Kohlenmonoxid, Ethylen und einem zweiten Kohlenwasserstoff mit mindestens drei Kohlenstoffatomen umfassen, insbesondere ein Alpha-Olefin, wie Propylen, Butylen, Hexylen, Octen oder Dodecen, und optional ein oder mehrere PEK, ausgewählt aus einer Gruppe von Polyaryletherketon (PAEK), wie Polyetheretherketon (PEEK) und Polyetherketonketon (PEKK), umfasst.

4. Faserverstärktes thermoplastisches UD-Band nach einem der vorstehenden Ansprüche, das eine Breite von mindestens 2 cm aufweist und/oder eine Dicke zwischen 0,10 und 0,80 mm, bevorzugt zwischen 0,15 und 0,50 mm, bevorzugter zwischen 0,25 und 0,35 mm aufweist.

5. Faserverstärktes thermoplastisches UD-Band nach einem der vorstehenden Ansprüche, wobei das thermoplastische Matrixmaterial zwischen 20 und 100 Gew.-%, bevorzugt zwischen 25 und 90 Gew.-%, bevorzugter mindestens 60 Gew.-%, besonders bevorzugt mindestens 70 Gew.-% des einen oder der mehreren POK umfasst, bezogen auf das Gesamtgewicht des thermoplastischen Matrixmaterials.

6. Faserverstärktes thermoplastisches UD-Band nach einem der vorstehenden Ansprüche, wobei das thermoplastische Matrixmaterial weiter ein oder mehrere zusätzliche Polymere umfasst, ausgewählt aus der Gruppe bestehend aus Polyamiden, Polyolefinen, Polyphenylensulfid (PPS), Polyethersulfon (PES) und Polyetherimid (PEI).

7. Faserverstärktes thermoplastisches UD-Band nach einem der vorstehenden Ansprüche, wobei das thermoplastische Matrixmaterial weiter ein oder mehrere Additive umfasst, ausgewählt aus der Gruppe bestehend aus Verträglichkeitsvermittlern, Stabilisatoren, Imprägniermitteln, Schmiermitteln, Antioxidantien und Flammschutzmitteln.

8. Faserverstärktes thermoplastisches UD-Band nach einem der vorstehenden Ansprüche, wobei das eine oder die mehreren POK Folgendes aufweisen:
- eine Schmelzmassenflussrate (MFR) von mindestens 60 g/10 min, bevorzugt mindestens 100 g/10 min, bevorzugter mindestens 150 g/10 min, besonders bevorzugt zwischen 60 und 200 g/10 min, gemessen bei 240 °C mit einer Last von 2,16 kg nach ASTM D1238-23; und/oder
- eine Viskosität von höchstens 100 Pa·s, bevorzugt höchstens 70 Pa·s, gemessen bei 240 °C nach ISO 6721.

9. Faserverstärktes thermoplastisches UD-Band nach einem der vorstehenden Ansprüche, wobei das UD-Band zwischen 10 und 74 Gew.-% unidirektional ausgerichtete Verstärkungsfasern, zwischen 25 und 89 Gew.-% thermoplastisches Matrixmaterial und zwischen 1 und 10 Gew.-% Additive umfasst, bezogen auf das Gesamtgewicht des UD-Bandes.

10. Faserverstärktes thermoplastisches UD-Band nach einem der vorstehenden Ansprüche, wobei die unidirektional ausgerichteten Verstärkungsfasern aus der Gruppe ausgewählt sind, die aus Glasfasern, Kohlenstofffasern, Basaltfasern, Keramikfasern, Aramidfasern, Hanffasern, Flachsfasern, Sisalfasern und einer oder mehreren Kombinationen davon, bevorzugt Glasfasern, Kohlenstofffasern und/oder Basaltfasern, bevorzugter Glasfasern und/oder Basaltfasern besteht.

11. Faserverstärktes thermoplastisches UD-Band nach einem der vorstehenden Ansprüche, wobei die unidirektional ausgerichteten Verstärkungsfasern einen Durchmesser zwischen 4 und 20 µm und/oder eine Länge von mindestens 100 mm, bevorzugt mindestens 1000 mm aufweisen.

12. Faserverstärktes thermoplastisches UD-Band nach einem der vorstehenden Ansprüche, wobei die unidirektional ausgerichteten Verstärkungsfasern in einer Längsrichtung parallel zueinander ausgerichtet sind.

13. Faserverstärktes thermoplastisches UD-Band nach einem der vorstehenden Ansprüche, wobei das UD-Band eine oder mehrere vernetzte POK umfasst.

14. Verfahren zur Herstellung eines faserverstärkten thermoplastischen UD-Bandes nach einem der vorstehenden Ansprüche, wobei das Verfahren umfasst:
- Schmelzimprägnieren durch Inkontaktbringen der unidirektional ausgerichteten Verstärkungsfasern mit einem geschmolzenen thermoplastischen Matrixmaterial; oder
- Pulverstreuen durch Aufbringen des thermoplastischen Matrixmaterials in Pulverform auf die unidirektional ausgerichteten Verstärkungsfasern.

15. Verwendung des faserverstärkten thermoplastischen UD-Bandes nach einem der Ansprüche 1-13 oder hergestellt nach dem Verfahren nach Anspruch 14 für ein verstärktes thermoplastisches Rohr (RTP), bevorzugt zum Transportieren von Fluiden.

16. Verstärktes thermoplastisches Rohr (RTP), das von einer Mitte zu einem Umfang eine thermoplastische Innenauskleidung, eine Verstärkungsschicht, die das faserverstärkte thermoplastische UD-Band nach einem der Ansprüche 1-13 umfasst oder nach dem Verfahren nach Anspruch 14 hergestellt ist, und einen thermoplastischen Außenmantel umfasst.

## Revendications

1. Bande unidirectionnelle (UD) thermoplastique renforcée par des fibres comprenant un matériau de matrice thermoplastique et des fibres de renforcement alignées de manière unidirectionnelle dispersées dans le matériau de matrice thermoplastique, dans laquelle le matériau de matrice thermoplastique comprend une ou plusieurs polycétones aliphatiques (POK).

2. Bande UD thermoplastique renforcée par des fibres selon la revendication 1, dans laquelle le matériau de matrice thermoplastique comprend en outre une ou plusieurs polycétones aromatiques (PEK).

3. Bande UD thermoplastique renforcée par des fibres selon la revendication 1 ou 2, dans laquelle le matériau de matrice thermoplastique comprend un ou plusieurs POK choisis dans le groupe consistant en des copolymères comprenant des monomères de monoxyde de carbone et d'éthylène, et des terpolymères comprenant des monomères de monoxyde de carbone, d'éthylène et d'un second hydrocarbure d'au moins trois atomes de carbone, en particulier une alpha-oléfine telle que le propylène, le butylène, l'hexylène, l'octène ou le dodécène, et éventuellement un ou plusieurs PEK choisis dans un groupe de polyaryléthercétone (PAEK), tel que le polyétheréthercétone (PEEK) et le polyéthercétonecétone (PEKK).

4. Bande UD thermoplastique renforcée par des fibres selon l'une quelconque des revendications précédentes, présentant une largeur d'au moins 2 cm et/ou présentant une épaisseur comprise entre 0,10 et 0,80 mm, de préférence entre 0,15 et 0,50 mm, plus préférentiellement entre 0,25 et 0,35 mm.

5. Bande UD thermoplastique renforcée par des fibres selon l'une quelconque des revendications précédentes, dans laquelle le matériau de matrice thermoplastique comprend entre 20 et 100 % en poids, de préférence entre 25 et 90 % en poids, plus préférentiellement au moins 60 % en poids, le plus préférentiellement au moins 70 % en poids des un ou plusieurs POK, sur la base du poids total du matériau de matrice thermoplastique.

6. Bande UD thermoplastique renforcée par des fibres selon l'une quelconque des revendications précédentes, dans laquelle le matériau de matrice thermoplastique comprend en outre un ou plusieurs polymères supplémentaires choisis dans le groupe consistant en les polyamides, les polyoléfines, le sulfure de polyphénylène (PPS), le polyéthersulfone (PES) et le polyétherimide (PEI).

7. Bande UD thermoplastique renforcée par des fibres selon l'une quelconque des revendications précédentes, dans laquelle le matériau de matrice thermoplastique comprend en outre un ou plusieurs additifs choisis dans le groupe consistant en des agents de compatibilité, des stabilisants, des agents d'imprégnation, des lubrifiants, des antioxydants et des agents ignifuges.

8. Bande UD thermoplastique renforcée par des fibres selon l'une quelconque des revendications précédentes, dans laquelle les un ou plusieurs POK présentent :
- un indice de fluidité en masse (MFR) d'au moins 60 g/10 min, de préférence d'au moins 100 g/10 min, plus préférentiellement d'au moins 150 g/10 min, le plus préférentiellement entre 60 et 200 g/10 min mesuré à 240 °C avec une charge de 2,16 kg selon la norme ASTM D1238-23 ; et/ou
- une viscosité d'au plus 100 Pa·s, de préférence d'au plus 70 Pa·s, mesurée à 240 °C selon la norme ISO 6721.

9. Bande UD thermoplastique renforcée par des fibres selon l'une quelconque des revendications précédentes, dans laquelle la bande UD comprend entre 10 et 74 % en poids de fibres de renforcement alignées unidirectionnellement, entre 25 et 89 % en poids de matériau de matrice thermoplastique et entre 1 et 10 % en poids d'additifs, sur la base du poids total de la bande UD.

10. Bande UD thermoplastique renforcée par des fibres selon l'une quelconque des revendications précédentes, dans laquelle les fibres de renforcement alignées de manière unidirectionnelle sont choisies dans le groupe consistant en les fibres de verre, les fibres de carbone, les fibres de basalte, les fibres céramiques, les fibres d'aramide, les fibres de chanvre, les fibres de lin, les fibres de sisal et une ou plusieurs combinaisons de celles-ci, de préférence les fibres de verre, les fibres de carbone et/ou les fibres de basalte, plus préférentiellement les fibres de verre et/ou les fibres de basalte.

11. Bande UD thermoplastique renforcée par des fibres selon l'une quelconque des revendications précédentes, dans laquelle les fibres de renforcement alignées de manière unidirectionnelle présentent un diamètre compris entre 4 et 20 µm et/ou une longueur d'au moins 100 mm, de préférence d'au moins 1000 mm.

12. Bande UD thermoplastique renforcée par des fibres selon l'une quelconque des revendications précédentes, dans laquelle les fibres de renforcement alignées de manière unidirectionnelle sont alignées parallèlement les unes aux autres dans une direction longitudinale.

13. Bande UD thermoplastique renforcée par des fibres selon l'une quelconque des revendications précédentes, dans laquelle la bande UD comprend un ou plusieurs POK réticulés.

14. Procédé de fabrication d'une bande UD thermoplastique renforcée par des fibres selon l'une quelconque des revendications précédentes, ledit procédé comprenant :
- l'imprégnation par fusion en mettant en contact les fibres de renforcement alignées de manière unidirectionnelle avec un matériau de matrice thermoplastique fondu ; ou
- la diffusion de poudre par application du matériau de matrice thermoplastique sous forme de poudre sur les fibres de renforcement alignées de manière unidirectionnelle.

15. Utilisation de la bande UD thermoplastique renforcée par des fibres selon l'une quelconque des revendications 1-13 ou préparée selon le procédé de la revendication 14 pour un tuyau thermoplastique renforcé (RTP), de préférence pour le transport de fluides.

16. Tuyau thermoplastique renforcé (RTP) comprenant, du centre vers la périphérie, une chemise intérieure thermoplastique, une couche de renforcement comprenant la bande UD thermoplastique renforcée par des fibres selon l'une quelconque des revendications 1-13, ou préparée selon le procédé de la revendication 14, et une gaine extérieure thermoplastique.
